# EUROPEAN PATENT SPECIFICATION

(11) **EP 3 000 300 B1**
(45) Date of publication and mention of the grant of the patent: **20.06.2018**
(21) Application number: 15186367.7
(22) Date of filing: 23.09.2015
(51) Int. Cl.: A01D 34/90

(54) **GRASS TRIMMER**
RASENSCHNEIDER
TONDEUSE À GAZON

(30) Priority: 28.09.2014 CN 201410510489; 28.09.2014 CN 201410510728; 28.09.2014 CN 201420566460 U; 28.09.2014 CN 201420566268 U
(43) Date of publication of application: 30.03.2016
(73) Proprietor: Chervon (HK) Limited, Hong Kong (CN)
(72) Inventor: Yamaoka, Toshinari, 211106 Nanjing (CN); Nie, Fangjie, 211106 Nanjing (CN); Guo, Jianpeng, 211106 Nanjing (CN)
(74) Representative: Sun, Yiming

(56) References cited:
- EP-A1- 2 736 163
- WO-A2-2013/147316
- US-A- 3 077 664
- US-A1- 2011 203 118
- US-A1- 2014 165 412

## Description

### FIELD OF THE DISCLOSURE

The present disclosure relates to a grass trimmer.

### DESCRIPTION OF THE RELATED ART

A grass trimmer is an essential tool in the field of gardening. A portable grass trimmer attracts more attentions than a benchtop grass trimmer having a large size and a large weight. With the development of the grass trimmer, the grass trimmer is expected to have increased power and operation capability. However, the grass trimmer, if having a large power, will have a large size and a large weight. The grass trimmer leads will be heavy burden for an operator, as an uncomfortable experience in use. Moreover, the grass trimmer has a housing consisting of several parts, which is difficult to be assembled in manufacturer. A portable grass trimmer of this kind is known from document US 2011/203118 A1.

### BRIEF DESCRIPTION OF THE DISCLOSURE

According to the invention there is provided a grass trimmer according to claim 1. Such a grass trimmer comprises a main body and a trimming device, wherein the main body comprises an operating device and a power source; the trimming device comprises: a grass cutting assembly having a cutting member; and a power head for rotating the cutting member; the power head comprises: a housing being formed integrally and defining an accommodation chamber; a rotor assembly received in the accommodation chamber of the housing and comprising a rotor sleeve which is rotary around a pivotal axis; a stator assembly, at least partly received in the rotor sleeve; wherein the rotor assembly further comprises two or more magnetic pieces at an inner wall of the rotor sleeve, the stator assembly comprises a stator support and a coil assembly; the stator support comprises: a mounting portion, being secured on the housing; a supporting portion, for supporting the coil assembly; the coil assembly is disposed in the rotor sleeve by the supporting portion.

### BRIEF DESCRIPTION OF THE DRAWINGS

FIG. 1 is a perspective view of an example grass trimmer according to a first embodiment of the present invention;
FIG. 2 is a side view of the grass trimmer shown in FIG. 1;
FIG. 3 is a structural view of an inner structure of a control knob shown in FIG. 1;
FIG. 4 is a structural view of some parts of the control knob shown in FIG. 3, where a master trigger is in an off state, and a speed trigger is in a zero position;
FIG. 5 is a structural view of some parts of the control knob shown in FIG. 3, where the master trigger is in an on state, and the speed trigger is in a super speed position;
FIG. 6 is a structural view of a regulation knob shown in FIG. 1;
FIG. 7 is a structural view of a knob body of the regulation knob shown in FIG. 6;
FIG. 8 is a cross-sectional view of region A shown in FIG. 6;
FIG. 9 is a structural view of a stopper shown in FIG. 6;
FIG. 10 is a structural view of a connecting assembly shown in FIG. 1;
FIG. 11 is an enlarged view of region B shown in FIG. 10;
FIG. 12 is an exploded view of the grass trimmer shown in FIG. 1;
FIG. 13 is an enlarged view of a housing shown in FIG. 12;
FIG. 14 is a side view of the housing shown in FIG. 12;
FIG. 15 is a structural view of a brushless motor shown in FIG. 12;
FIG. 16 is a cross-sectional view of the brushless motor shown in FIG. 15;
FIG. 17 is a perspective view of a tangle-free cover shown in FIG. 12;
FIG. 18 is a structural view of a connecting assembly of a grass trimmer, where a first connecting rod and a second connecting rod are arranged in a line;
FIG. 19 is a structural view of the connecting assembly shown in FIG. 18 in another state, where a first connecting rod and a second connecting rod are not arranged in a line;
FIG. 20 is a structural view of a connecting assembly of a grass trimmer, where a first connecting rod and a second connecting rod are arranged in a line;
FIG. 21 is a structural view of the connecting assembly shown in FIG. 20 in another state, where a first connecting rod and a second connecting rod are not arranged in a line;
FIG. 22 is a structural view of a connecting assembly of a grass trimmer, where a first connecting rod and a second connecting rod are arranged in a line;
FIG. 23 is a structural view of the connecting assembly shown in FIG. 22 in another state, where a first connecting rod and a second connecting rod are not arranged in a line; and
FIG. 24 is an exploded view of a connecting assembly shown in FIG. 22.

### DETAILED DESCRIPTION OF EMBODIMENTS OF THE DISCLOSURE

Reference will now be made in detail to particular embodiments of the disclosure, examples of which are illustrated in the accompanying drawings.

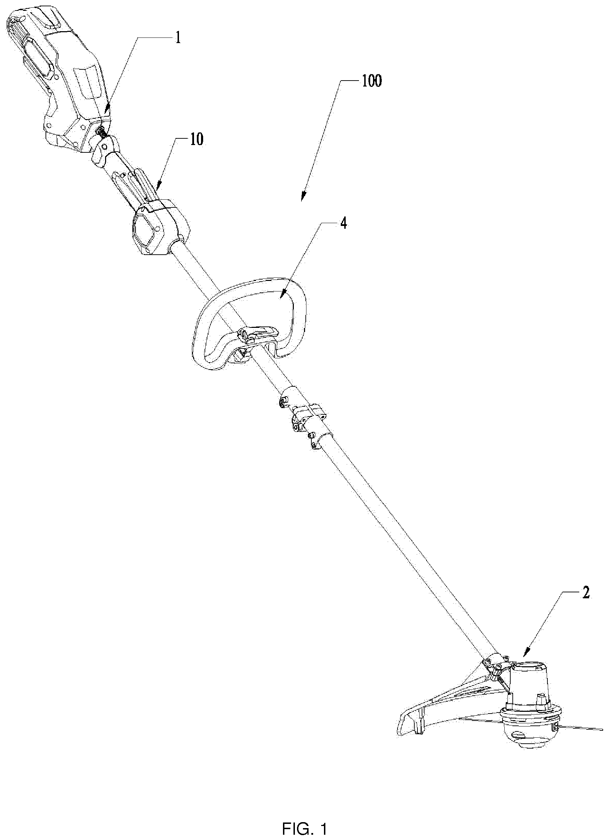

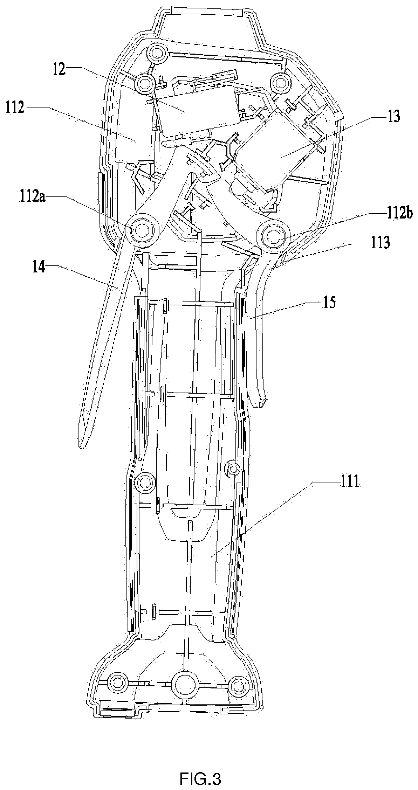

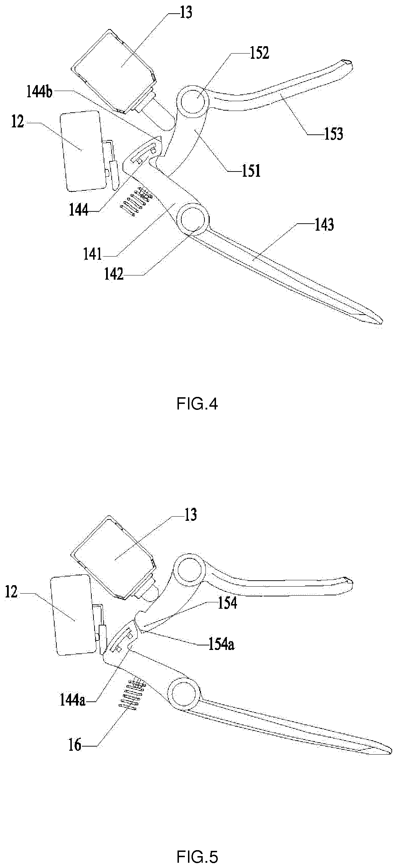

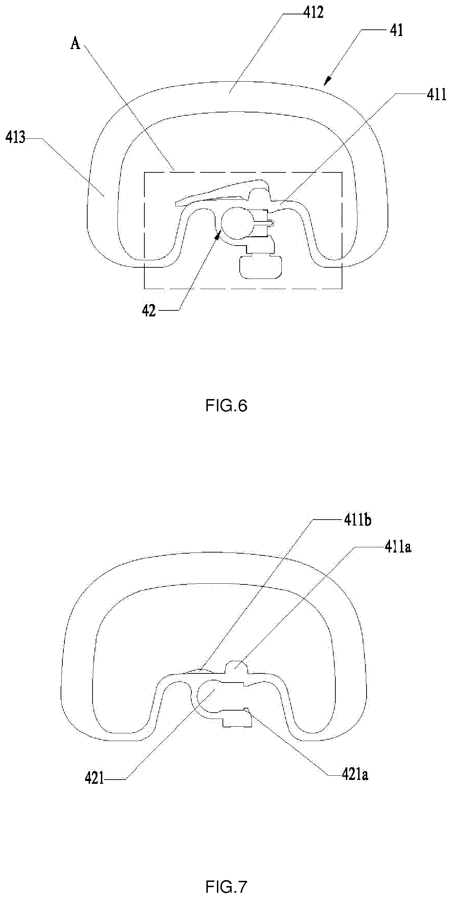

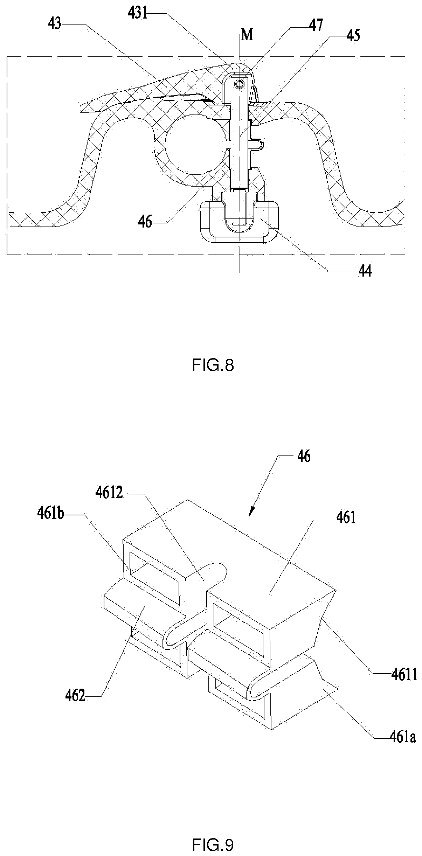

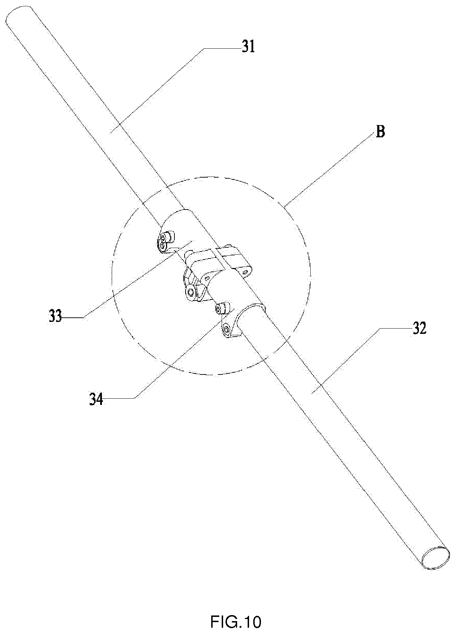

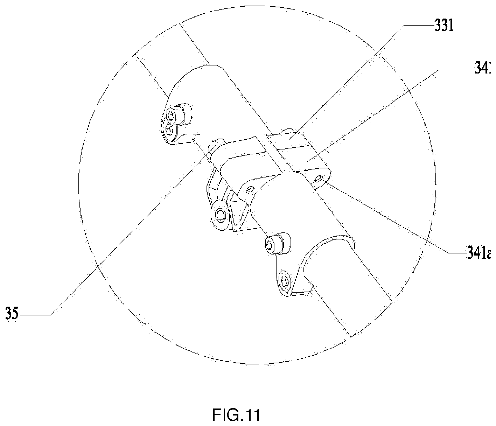

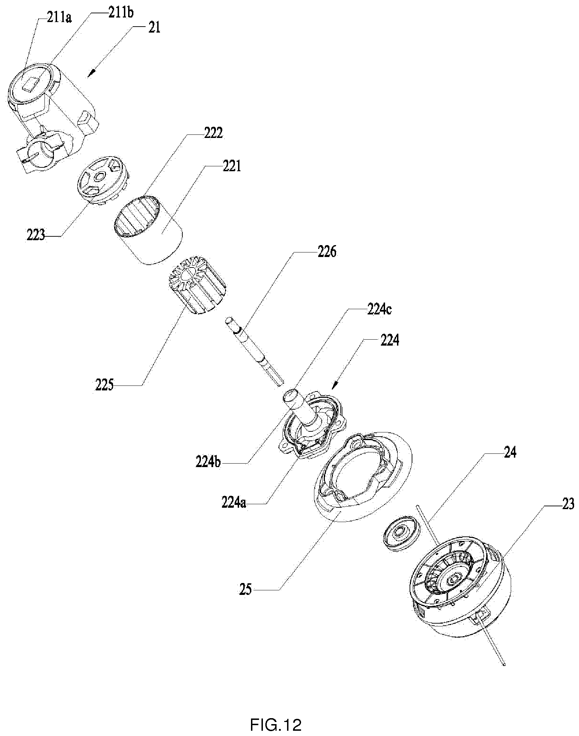

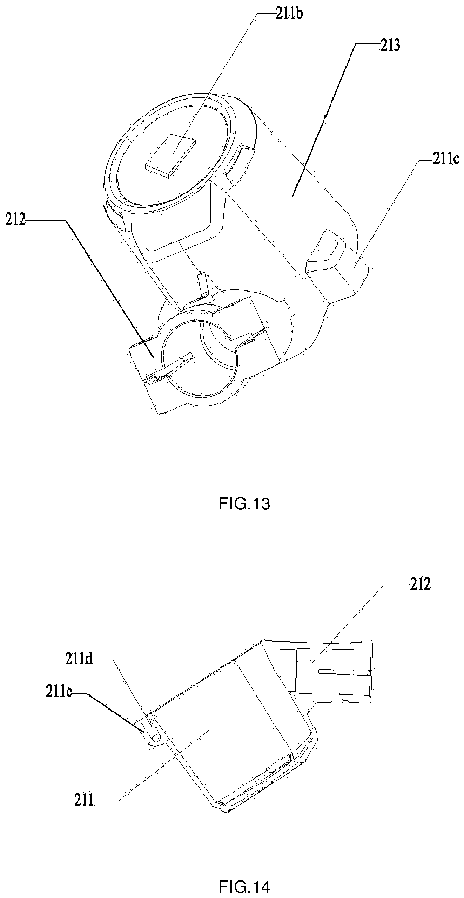

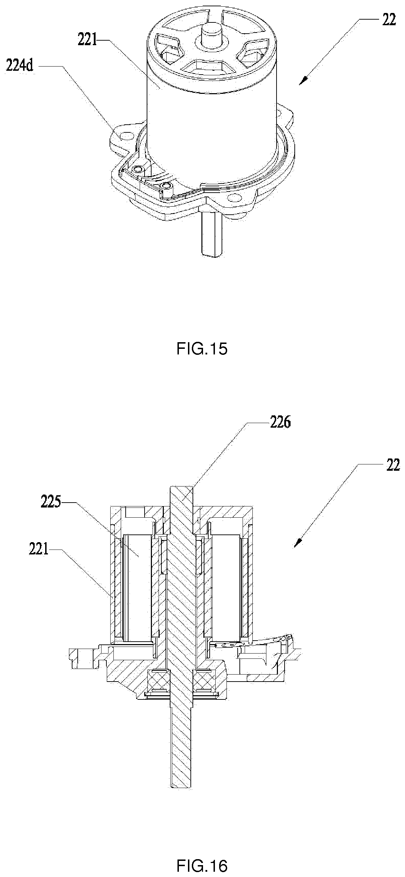

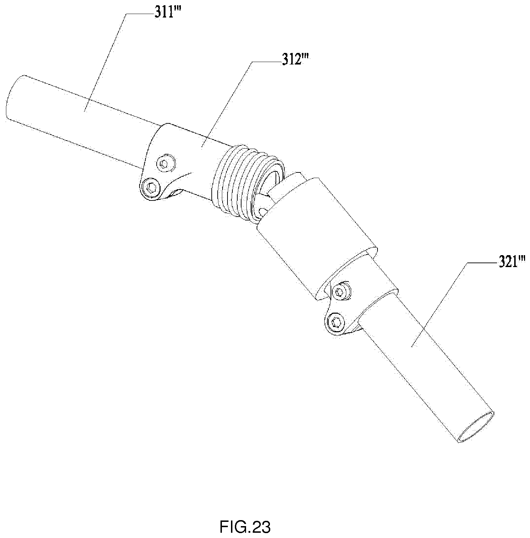

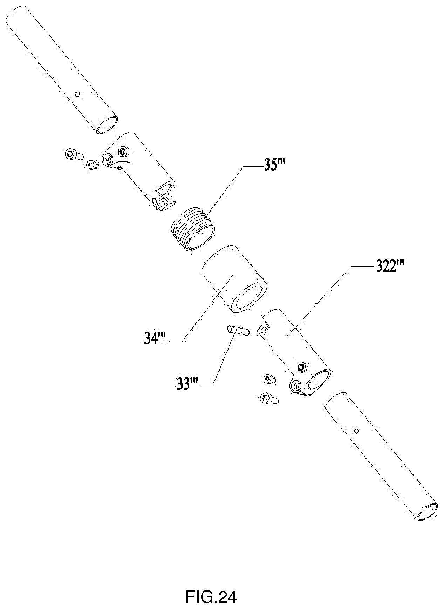

Referring to FIGs. 1 to 24, a grass trimmer 100 according to the present invention includes a main body 1, a trimming device 2, a first connecting member 3 used to connect the main body 1 with the trimming device 2, and a regulation knob 4. The main body 1 includes an operating device 10 and a power source. The trimming device 2 includes a motor and a grass cutting assembly. In this example, the power source is a power supply, and the motor is an electric motor. To facilitate description of the present invention hereinafter, a back end means one end of the first connecting member 3 which is connected to the main body 1, and a front end means the other end of the first connecting member 3 which is connected to the trimming device 2. Nevertheless, the terms used here does not imply limitation to the scope of the present invention.

The main body 1 is disposed at the back end of the grass trimmer 100. The power source supplies electric energy to the grass trimmer 100. The power supply may be a battery pack which is mounted detachably at the back end of the grass trimmer 100. It should be understood that the power supply can also be an AC power supply from an electric grid. The operating device 10 controls the power source to supply electric energy to the motor or not. The operating device 10 includes an operative control knob. In this example, a power supply circuit is provided between the power supply and the motor for supply electric energy.

The control knob includes a knob housing 11, a master switch 12, a speed switch 13, a master trigger 14, and a speed trigger 15. The knob housing 11 includes a handle portion 111 and an accommodation portion 112. The handle portion 111 and the accommodation portion 112 are located at two ends of the knob housing 11. The handle portion 111 is used as a main handle of the grass trimmer 100 for an operator. At the accommodation portion 112 , a master post 112a is formed for being connected with the master trigger 14, and a speed post 112b is formed for being connected with the speed trigger 15, respectively.

The master switch 12 is used for turning on or off the power supply circuit, and is received in the accommodation portion 112 of the knob housing 11. The speed switch 13 is used for regulating a speed of the motor when the power supply circuit is turned on, and is also received in the accommodation portion 112 of the knob portion 11.

The master trigger 14 is used for controlling the master switch 12. The speed trigger 15 is used for controlling the speed switch 13. The master trigger 14 and the speed trigger 15 are both partially received in the knob housing 11, and provide movable joint with the knob housing respectively. It should be understood that the movable joint between the master trigger 14, the speed trigger 15 and the knob housing 11 may be one of rotation, sliding motion, reciprocating motion, and there any combinations. Rotation is preferable here. The master trigger 14 may be in an on or off position in the rotation. In a case that the master trigger 14 is in the on state, the master switch 12 controls the power supply circuit to be turned on. In a case that the master trigger 14 is in an off state, the master switch 12 controls the power supply circuit to be turned off. The speed trigger 15 may be in a zero speed or a super speed position in the rotation. In a case that the speed trigger 15 is in the zero speed position, the speed switch 13 controls the motor to have a zero rotational speed. In a case that the speed trigger 15 is in a super speed position, the speed switch 13 controls the motor to have a maximum rotational speed. In a case that the master trigger 14 is in an off position, the stopper is located in a path of the speed trigger 15 from the zero speed position to the super speed position. Only in a case that the master trigger 14 leaves the off position, the speed trigger 15 can be moved from the zero speed position to the super speed potion. In other words, in a case that the master trigger 14 is in the off position, the speed trigger 15 is locked at the zero speed position, or at a position further away from the super speed position, compared with the zero speed position. Moreover, in a case that the master trigger 14 is in the on state, the speed trigger 15 is movable between the zero speed position and the super speed position, so that the master trigger 14 and the speed trigger 15 is operated in sequence. The speed trigger 15 can only be operated after the master trigger 14 is operated, which achieves improved safety. Thus, the operating device 10 in the present invention controls the power supply circuit and the rotational speed of the motor by using the master trigger 14 and the speed trigger 15. The two-trigger configuration substantively simplifies the structure of the switches and reduces materials used therein, and thus reduces manufacturer cost.

Specifically, the master trigger 14 includes a master shaft arm 141, a master shaft hole 142 and a master handle 143. The master shaft arm 141 and the master shaft hole 142 are received in the accommodation portion 112 of the knob housing 11. The master handle 143 is partially received in the knob housing 11. The master shaft hole 142 connects the master shaft arm 141 and the master handle 143. One end of the master shaft 141 opposite to the master shaft hole 142 contacts the master switch 12. A first stopper 144 is formed at the one end to prevent the speed trigger 15 from moving from the zero speed position to the super speed position in a case that the master trigger 14 is in the off state. The master shaft hole 142 holds the master post 112a in the accommodation portion 112, and can be rotated around the master post 112a. One end of the master handle 143 opposite to the master hole 142 is outside the knob housing 11, for manual operation of a hand. The one end opposite to the master shaft hole 142 is a free end and moves from one side near the knob to the other side near the handle portion 111 gradually in a case that the master trigger 14 is rotated from the off position to the on position. In this example, the control knob further comprises a pressing member 16 which presses against the master trigger 14 so that the master trigger 16 tends to reset at the off position. The pressing member 16 is a coil spring with one end secured on the master shaft arm 141 of the master trigger 14 and the other end against the knob housing 11.

The speed trigger 15 includes a speed shaft arm 151, a speed shaft hole 152 and a speed handle 153. The speed shaft arm 151 and the speed shaft hole 152 are received in the accommodation portion 112 of the knob housing 11. The speed handle 143 is partially received in the knob housing 11. The speed shaft hole 152 connects the speed 151 and the speed handle 153. One end of the speed shaft arm 151 opposite to the speed shaft hole 152 may contact the speed switch 13. A second stopper 154 is formed at the one end to cooperate with the first stopper 144. The first stopper 144 has a stop groove 144a. When the first stopper 144 cooperates with the second stopper 154, the second stopper 154 is partially embedded in and pressed against the stop groove 144a. Meanwhile, the first stopper 144 is reversely pressed against the second stopper 154. The pressure and the reverse pressure are interactive forces. The reverse pressure applies torque to a rotation shaft of the master trigger 14, which has a value less than that needed for rotating the master trigger 14. Thus, the speed trigger 15 is locked when the master trigger 14 is in the off position. The speed shaft hole 152 holds the speed post 112b in the accommodation portion 112, and can be rotated around the speed post 112b. One end of the speed handle 153 opposite to the speed shaft hole 152 is outside the knob housing 11, for manual operation of a hand. The one end opposite to the speed shaft hole 152 is a free end and moves from one side near the knob to the other side near the handle portion 111 gradually in a case that the speed trigger 15 is rotated from the zero speed position to the super speed position. The master trigger 14 and the speed trigger 15 have exposed portions at both sides of the handle portion 111, so that one hand can operate the master trigger 14 and the speed trigger 15 at the same time. A distance between one end of the master handle 143 opposite to the master shaft hole 142 and a central axis of the master shaft hole 142 is greater than a distance between one end of the speed trigger 153 opposite to the speed shaft hole 152 and the central axis of the speed shaft hole 152. The design is optimized for the hand to operate arbitrarily. The knob housing 11 further includes a restriction rib 113 which restricts the speed trigger 15 to the zero speed position or to be near the zero speed position. In other words, in a case that the master trigger 14 is in the off position, the speed trigger 15 is restricted to the zero speed position and will not move to an opposite direction to the side near the super speed position. The first stopper 144 further includes a first stop surface 144b, and the second stopper 154 further includes a second stop surface 154a which cooperates with the first stop surface 144b. In a case that the speed trigger 15 is in the super speed position or in a position between the zero speed position and the super speed position, the second stop surface 154a is always pressed against the first stop surface 144b, so that the master trigger 14 is locked at the on position. In a case that the speed trigger 15 is in a zero speed position, the second stop surface 154a is separated from the first stop surface 144b to release the master trigger 14. Thus, the speed trigger 15 is locked when the master trigger 14 is in the off position, by an interaction of the stop groove 144a and the second stopper 154, so that the speed trigger 15 can only trigger the speed switch 13 to adjust the speed in a case that the master trigger 14 firstly triggers the master switch 12 to turn on the power supply circuit. The master trigger 14 is locked in the on position in a case that the speed trigger 15 triggers the speed switch 13 to the super speed position or the zero speed position, by an interaction of the second stop surface 154a and the first stop surface 144b. The master trigger 14 cannot be released to the off position until the speed trigger 15 returns to the zero speed position. Thus, the interlock of the master trigger 14 and the speed trigger 15 ensures that electric energy is supplied in accordance with an expected sequence of current to protect an operator.

The first connecting member 3 is provided between the main body 1 and the trimming device 2 as a connection. Specifically, the first connecting member 3 is a metal rod extending in a first line L. The metal rod is hollow so that the conductive wires pass through an inner hole of the metal rod, for electrical connection between the power supply and the motor. This provides beautiful appearance and increased safety.

The regulation knob 4 is an auxiliary knob for an operator to use the grass trimmer. The operator can use both hands to hold different parts of the grass trimmer 100 easily, even in a case that grass trimmer has a relatively large size or has a relatively large weight. In this example, the regulation knob 4 is formed on the first connecting member 3, and is movable along an extension direction of the first connecting member 3, and provides a sliding joint with the first connecting member 3. In other words, the regulation knob 4 can slide along the first line L on the first connecting member 3.

Specifically, the regulation knob 4 includes a knob body and a lock assembly. The lock assembly is used for locking or releasing a position of the knob body on the first connecting member 3.

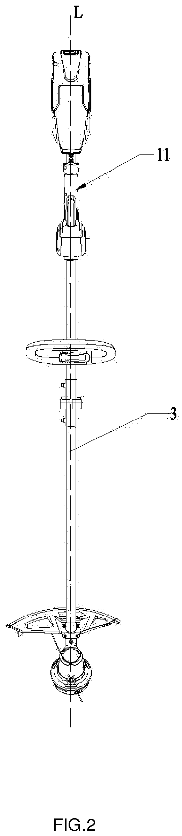

The knob body includes a knob frame 41 and a clamp portion 42 which are formed integrally. The knob frame 41 has a concave shape and includes a recess portion 411 which is recessed inwards, a holding portion 412 for a hand, and a connecting portion 413 between the recess portion 411 and the holding portion 412. One end of the recess portion 411 opposite to the holding portion 412 is used for securing the clamp portion 42. The connecting portion 413 is used for connecting the holding portion 412 and the clamp portion 42. In this example, the holding portion 412 and the recess portion 411 are not arranged in the same plane. In other words, the connecting portion 413 is inclined to cross the first line L (as shown in FIG. 2). Accordingly, an operator can stretch his arm freely and comfortably, without the need for bending his arm, when griping the holding portion 412 with a hand.

The clamp portion 42 and the lock assembly are connected to the first connecting member 3, for clamping the first connecting member 3, and are provided in the recess portion 411 of the knob frame 41. The clamp portion 42 includes a clamp groove 421 at an outer surface of the knob frame 41. The clamp groove 421 has a U-shape structure, so that the first connecting member 3 passes through the clamp groove 421 in a direction of the first line L.

The lock assembly includes a lock member, a lock knob 44, a second connecting member 45 and a stopper 46. The lock member can lock or release the knob body, and specifically, may be a switch knob 43 between the holding portion 412 and the first connecting member 3. The second connecting member 45 is used for connecting the switch knob 43 and the lock knob 44. The second connecting member 45 passes through the U-shape opening of the clamp groove 421 from one side to the other side of the clam portion 421, and extends in a direction of a second line M which is perpendicular to the first line L. One end of the second connecting member 45 extends into the lock assembly 41 and is fixed to the switch knob 43. The other end of the second connecting member 45 is a threaded end, extends outside the clamp portion 42 and can have a threaded connection with the switch knob 44.

The switch knob 43 is disposed at one side of the recess portion 411 opposite to the clamp portion 42, and is rotary around a first axis and changes a distance between the first axis and the first connecting member 3 during rotation. Specifically, the switch knob 43 includes a supporting portion 431 which rotates around a pivot 47 penetrates the second connecting member 45 and is connected to the second connecting member 45. Actually, the first axis is an extension direction of the pivot 47, and is parallel to the first line L. The distance between the first axis and the first connecting member 3 has a maximum value when the supporting portion 431 is pressed against one side of the recess portion 411 opposite to the clamp portion 42. In this example, the supporting member 431 is a cam, so that the distance between the first axis and the first connecting member 3 has a maximum value when the cam is pressed against the recess portion 411 at a position furthest from a central point.

The lock knob 44 rotates around a second axis and changes a distance between the knock knob 44 and the first axis during rotation. Specifically, the lock knob 44 is disposed at one side of the clamp potion 42 opposite to the recess portion 411, i.e. one side of the U-shape portion of the clamp groove 421 opposite to the recess portion 411. The lock knob 44 and the switch knob 43 are provided at two opposite sides of the clamp portion 42. The lock knob 44 is also provided with internal threads, so that it can rotate around the second axis with respect to the second connecting member 45 at the threaded end of the second connecting member 45. Moreover, the lock knob 44 moves towards the switch knob 43 during rotation. In this example, the second axis is an extension direction of the second connecting member 45, and is perpendicular to the first axis.

The stopper 46 is disposed in the U-shape opening of the clamp groove 421 so that it matches the clamp trench 421 to attach the regulation knob 4 to the first connecting member 3. Specifically, the stopper 46 has two stop units 461. Each of the stop units 461 includes a contact portion 461a at one side and a limit portion 461b at the other side. The contact portion 461a includes a contact surface 4611, partially matching an outer contour of the first connecting member 3, so that it cooperates with the U-shape recess portion of the clamp groove 421 to clamp the outer contour of the first connecting member 3. The limit portion 461b contacts the second connecting member 45 and has a U-shape clamp groove 4612 for clamping the second connecting member 45. The stopper 46 further includes a connecting body 462 for connecting two stop units 461. The connecting body 462 is provided at one side where the limit portion 461b of the stop units 461 is provided, and has a U-shape cross section. In one embodiment, two connecting bodies 462 are provided at two sides of the U-shape clam groove 4612, with one at either side. Thus, two stop units 461 move towards each other by the U-shape connecting body 462 when the stopper 46 is pressed in a direction of the second axis, so that the contact surfaces 4611 of the two stop units 461 tightly match the outer contour of the first connecting member 3 to lock. A first limit bump 421a is provided in the U-shape opening of the clamp groove 421 and extends inwards to prevent displacement of the stopper 46. A second limit bump 411a and a third limit bump 411b are also provided at one side of the recess portion 411 of the knob frame 41 opposite to the clamp portion 42. The pair of second limit bump 411a is used for preventing displacement of the switch knob 3 in a direction of the first axis. The third limit bump 411b matches a limit groove inside the switch knob 43 to prevent displacement of the switch knob 43 in a direction of the first axis. The holding portion 412 further includes an operation position which allows an operator to grasp the knob body and access the switch knob 43with one hand at the same time. In other words, when the operator grasp the holding portion 412 with one hand, the one hand can also operate the handle 43. Thus, with only one hand, the switch knob 43can be operated to unlock the knob body, and the regulation knob can be adjusted to the desired position.

When the regulation knob 4 is used, the clamp groove 421 of the knob body fits the first connecting member 3, the second connecting member 45, which is in a fixed connection with the switch knob 43, passes through the clamp groove 421, and then the lock knob 44 is screwed on the threaded end of the second connecting member 45. The stopper 46 is placed into the U-shape opening of the clamp groove 421, and is clamped by the second connecting member 45. Finally, the knob body is adjusted, and the switch knob 43 is switched when the regulation knob 4 has a suitable position on the first connecting member to lock the position of the regulation knob 4 on the first connecting member 3.

When the position of the regulation knob 4 needs to be adjusted again, the switch knob 43 is switched in an opposite direction, and the regulation knob 4 can be rotated or moved. The switch knob 43 is switched again to lock when the regulation knob 4 is adjusted to a suitable position. The regulation knob 4 moves in an extension direction of the first connecting member 3. On one hand, an operator can move the regulation knob 4 in view of the position of grass trimming, so that the grass cutting head 23 of the grass trimmer 100 can easily and conveniently reach the position of grass trimming. On the other hand, the operator can grasp the operating device with one hand and grasp the regulation knob with the other hand to adjust the position of the regulation knob 4, so as to have a balance point of the grass trimmer to easily and stably hold the grass trimmer 100 for trimming.

In this example, for a convenient storage, the first connecting member 3 for connecting the main body 1 and the trimming device 2 includes an assembly of a first connecting rod 31 and a second connecting rod 32. The connecting assembly is used for connecting the main body 1 and the trimming device 2 as a whole.

In this example, the connecting assembly includes a first connecting rod 31, a second connecting rod 32 and a joint assembly. The first connecting rod 31 is connected to the main body 1. The second connecting rod 32 is connected to the trimming device 2. The joint assembly allows the first connecting rod 31 and the second connecting rod 32 to rotate relatively around a hinge shaft which is perpendicular to the first line L and outside the first connecting rod 31 and the second connecting rod 32.

The joint assembly includes a first end member 33, a second end member 34 and a lock assembly. The first end member 33 has one end which is fixedly connected to a free end of the first connecting rod 31, and the other end which is connected to the second end member 34 by a hinge. The second end member 34 has one end opposite to the first end member 33, which is fixedly connected to a free end of the second connecting rod 32. The free end of the first connecting rod 31 means one end opposite to the main body 1, and the free end of the second connecting rod 32 means one end opposite to the trimming device 2.

Specifically, the first end member 33 includes a first fixed portion 331 having a first threaded hole, and the second end member 34 includes a second fixed portion 341 having a second threaded hole 341a. The lock assembly is used for locking the second connecting rod 32 when the second connecting rod 32 rotates to a predetermined position with respect to the first connecting rod 31. The lock assembly includes a threaded connecting member 35. When the second connecting rod 32 turns to the predetermined position, the first threaded hole is aligned to the second threaded hole 341a, and the threaded connecting member 35 is screwed into the first threaded hole and the second threaded hole 341a, so as to lock the first end member 33 and the second end member 34. The first connecting rod 31 and the second connecting rod 32 extend both in a direction of the first line L. In this example, the predetermined position means a position where the first connecting rod 31 and the second connecting rod 32 are aligned in a line. The threaded connecting member 35 may be a bolt.

During grass trimming, the second connecting rod 32 is turned, the bolt is screwed into the threaded hole when the second connecting rod 32 rotates to be aligned in a line to the first connecting rod 31, so as to lock the second connecting rod 32 to start grass trimming. In a case that the grass trimmer 100 should be stored after grass trimming, the bolt is screwed out of the threaded hole, and the second connecting rod 32 rotates 180 degree, so that the second connecting rod 32 is placed in another line parallel to the first connecting rod 31. The connecting assembly is thus shortened to facilitate storage of the grass trimmer 100 with a small volume.

The trimming device 2 includes a power head and a grass cutting assembly. The power head is used for driving the grass cutting assembly, including a housing 21 and the above-mentioned motor, such as a brushless motor 22. The brushless motor 22 includes a rotor assembly, a stator assembly, and an output shaft 226. The rotor assembly is provided outside the stator assembly, and thus the motor is an outer rotor-type motor. The grass cutting assembly includes a grass cutting head 23, a cutting member 24 and a tangle-free cover 25.

The housing 21 includes an accommodation portion 211 and a connecting portion 212 which are formed integrally. The accommodation portion 211 is an integral member, including an outer surface 213 of a revolution body and an accommodation chamber in the accommodation portion. The accommodation chamber is a cylindrical chamber, with an axis of the output shaft 226 as a central axis and having a continuous and dense inner wall. The cylindrical chamber has an open end and a closed end, for receiving the rotor assembly and the stator assembly. There is a logo region 211a which is recessed at an outer surface of the closed end of the accommodation chamber, and a logo bump 211b which is embossed in the logo region 211a and has a maximum thickness less than a vertical distance between the outer surface of the closed end of the accommodation chamber and the logo region 211a. In other words, the logo bump 211b does not raise outside the outer surface of the closed end of the accommodation chamber. The open end of the accommodation chamber is used for the output shaft 226 to extend outside the accommodation chamber and to be connected to the grass cutting head 23. The connecting portion 212 is a portion of the accommodation portion 211 that is inclined to cross the output shaft 226, for connecting the trimming device 2 and the connecting assembly, both for providing a mechanical connection and an electric connection between the power supply and the power head. Specifically, the accommodation portion 211 has a maximum size in a radial direction of the output shaft 226 which is less than a maximum size of the grass cutting head 23 in the radial direction of the output shaft 226, to further protect the accommodation portion 211 from being damaged.

The rotor assembly includes a rotor sleeve 221 and magnetic pieces 222. The rotor sleeve 221 is a hollow cylinder, which is received in the accommodation chamber of the housing 21 and can rotate around an pivotal axis with respect to the accommodation chamber. Moreover, an outer wall of the rotor sleeve 221 is adjacent to an inner wall of the accommodation portion 211 of the housing 21, with a distance in the range of 0.5 mm to 5 mm, preferably 2 mm. It should be noted that the expression "the outer wall of the rotor sleeve 221 is adjacent to the inner wall of the accommodation portion 211 of the housing 21" means that there is no additional members between the outer wall of the rotor sleeve 221 and the inner wall of the accommodation portion 211 of the housing 21. Several magnetic pieces 222 are provided and arranged evenly in a circumferential direction in the inner wall of the rotor sleeve 221. In this example, the rotor assembly further includes a rotor cover 223 for closing the rotor sleeve 221. It should be understood that the rotor sleeve 221 and the rotor cover 223 can be formed integrally.

The stator assembly is partially received in the rotor sleeve 221, and includes a stator support 224 and a coil assembly 225. The stator support 224 includes a mounting portion 224a and a supporting portion 224b. The mounting portion 224a is fixedly connected to the housing 21, and is provided at the open end of the accommodation chamber. A mounting portion 211c is provided integrally at the open end of the accommodation portion 211 of the housing 21. The mounting portion 211c extends outwards from the housing 21 in a radial direction perpendicular to an axial direction of the pivotal axis, and has a mounting hole 211d which extends in the approximate axial direction (i.e. a direction of the output shaft 226) of the pivotal axis. The mounting hole 211d is a threaded hole. The mounting portion 224a has a matching portion 224d for the mounting portion 211c. A bolt passes through the mounting portion 211c and the matching portion 224d to secure the mounting portion 224a on the housing 21. The supporting portion 224d has one end being fixedly connected to the mounting portion 224a, and the other end extending into the rotor sleeve 221, for supporting the coil assembly 225 to ensure that the coil assembly 225 is located inside the rotor sleeve 221.

The output shaft 226 transfers torque of the power head to the grass cutting head 23 of the grass cutting assembly 23. A shaft hole 224c is formed in the stator support 224, and penetrates the mounting portion 224a and the supporting portion 224b from top to bottom. The output shaft 226 passes through the shaft hole 224c. The output shaft 226 rotates in the shaft hole 224c with respect to the shaft hole 224c when driven by the rotor sleeve 221. In this example, one end of the output shaft 226 is fixedly connected to a rotor cover 223, and the rotor cover 223 is fixedly connected to the rotor sleeve 221 so that the output shaft 226 rotates inside the rotor sleeve 221 when driven by the rotor sleeve 221.

The grass cutting head 23 rotates around the pivot axis when driven by the power head so that the torque can be introduced into the power head to drive the cutting member 24 to rotate. The cutting member 24 is a grass cutting string which is wounded on the grass cutting head 23 and cuts the grass during rapid rotation to trim grass. It can be understood that the cutting member 24 may be a saw blade. The tangle-free cover 25 is provided between the power head and the grass cutting head 23. The tangle-free cover 25 has a protection wall 251 which extends from an edge of the tangle-free cover 25 towards the grass cutting head 23, and a protection rib 252 which consists of several thin plates extending inwards in a radial direction inside the protection wall 251. The radial direction here means a direction perpendicular to and towards the axial direction of the pivotal axis.

In one embodiment, the housing 21 is made of an aluminum alloy, which is lightly-weighted and facilitates rapid heat dissipation.

In one embodiment, an ratio of outputting power of the power head with respect to the weight of the grass trimmer 100 is greater than 500W/kg so that the weight of the grass trimmer 100 can be decreased while the output power of the power head is increased.

In the trimming device 2 according to the present inventing, the brushless motor 22 is used, and the rotor assembly is provided outside the stator assembly, so that the power head has a large output power and trimming device 2 has a small size and weight. Moreover, the brushless motor 22 is used because the housing 21 can be formed integrally, which simplifies an assembling process of the housing 21 and reduces manufacture cost. Furthermore, the tangle-free cover 25 is provided in the grass cutting assembly to reduce probability that the grass cutting head 23 is tangled by the grass cutting string and the grass, and thus, to improve performance of the grass trimmer 100. There are alternatives of the connecting assembly according to the present invention.

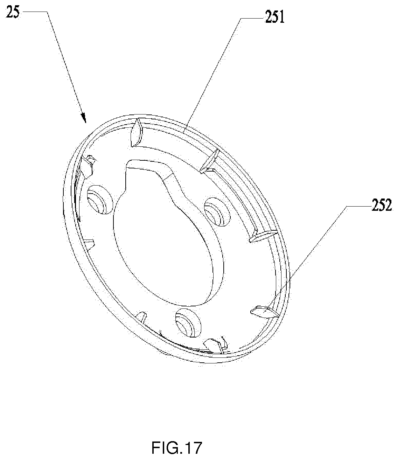

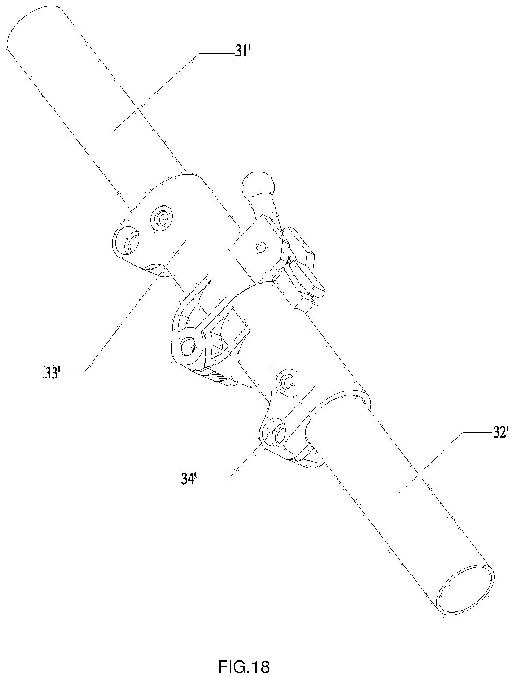

Referring to FIGs. 17-18, a connecting assembly is shown. In this example, the connecting assembly also includes a first connecting rod 31' and a second connecting rod 32', similar to the connecting assembly according to the first embodiment, but with a different joint assembly. Only different parts of the second embodiment compared with the first embodiment will be described. The joint assembly includes a first end member 33', a second end member 34' and a lock assembly. The lock assembly includes a rotating member 35', an manipulation member 36' and a limit member 37'. The rotating member 35' is a crank with one end providing a rotation joint with the first end member 33 around an axis parallel to the hinge shaft. The manipulation member 36' is a rectangular lock frame with one end providing a rotation joint with the rotating member 35' around an axis parallel to the hinge shaft and the other end matching the limit member 37'. The limit member 37' is secured on the second end member 34' and provided with a clamp groove 371' for clamping the lock frame. As shown in FIG. 18, in a case that the crank rotates clockwise, the other end of the lock frame matching the limit member 37' is clamped in the clamp groove 371' to lock the second end member 34', so that the first connecting rod 31' and the second connecting rod 32' are locked in a line. In a case that the crank rotates counterclockwise, the lock frame is separated from the clamp groove 371' to release the second end member 34', so that the second connecting rod 32' rotates with respect to the first connecting rod 31'.

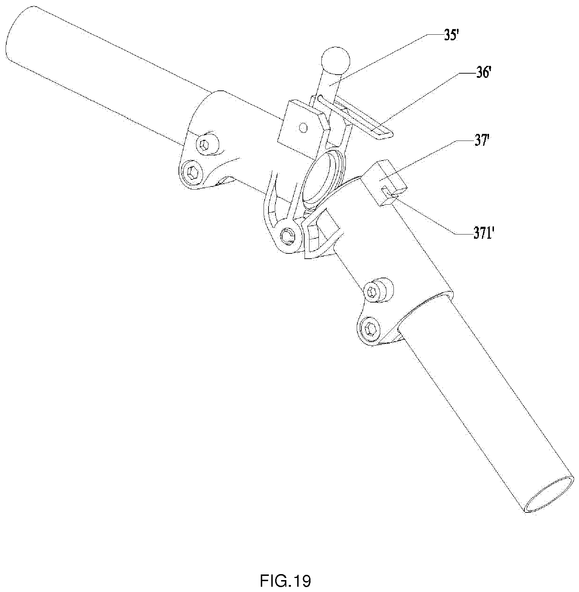

Referring to FIGs. 19-20, another connecting assembly is shown. In this example, the connecting assembly also includes a first connecting rod 31" and a second connecting rod 32", a first end member 33", and a second end member 34", similar to the connecting assembly according to the second embodiment, but with a different lock assembly. Only different parts of the third embodiment compared with the first embodiment will be described.

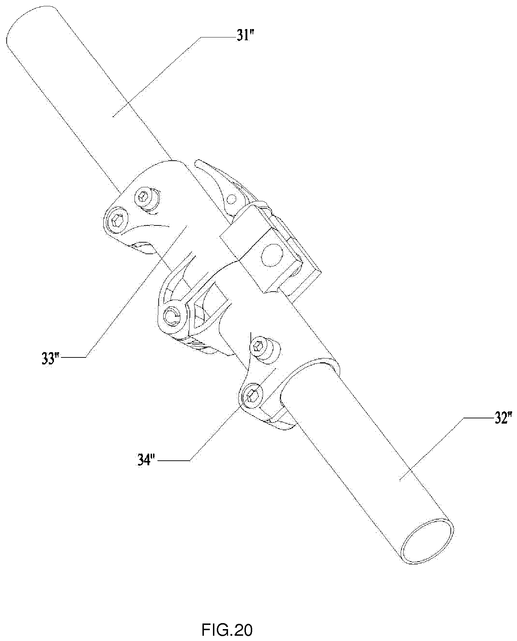

In this example, the lock assembly includes a rotating member 35", a manipulation member 36", a limit member 37" and a sliding member 38". The rotating member 35" is a pin shaft, with one end in a rotation joint with the first end member 33". The pin shaft penetrates a spring 39". The manipulation handle 36" is a cam handle having a cam portion 361" in a rotation joint with the rotating member 35". The limit member 37" is secured on the second end member 34", and has a lock groove 371" for receiving the rotating member 35". The sliding member 38" is provided at a free end of the rotating member 35". The sliding member 38" may be a gasket having a through hole, and the rotating member 35" penetrates the through hole. The sliding member 38" has one surface pressed against the spring 39". The gasket provides a sliding joint with the rotating member 35", by action of the spring 39" and the cam portion 361". Relative sliding occurs in a direction perpendicular to a direction of a rotation shaft of the rotation member 35". The gasket is secured on the lock groove 371" in a case that the rotating member 35" is received in the lock groove 371". As shown in FIG. 20, in a case that the cam handle rotates clockwise, the pin shaft is inserted into the lock groove 371", and the gasket is clamped between the lock groove 371" and the cam portion 361", by action of the cam portion 361", to lock the second end member 34", so that the first connecting rod 31" and the second connecting rod 32" are locked in a line. In a case that the cam handle rotates counterclockwise, the gasket and the pin shaft are separated from the lock groove 371" to release the second end member 34" so that the second connecting rod 32" rotates with respect to the first connecting rod 31".

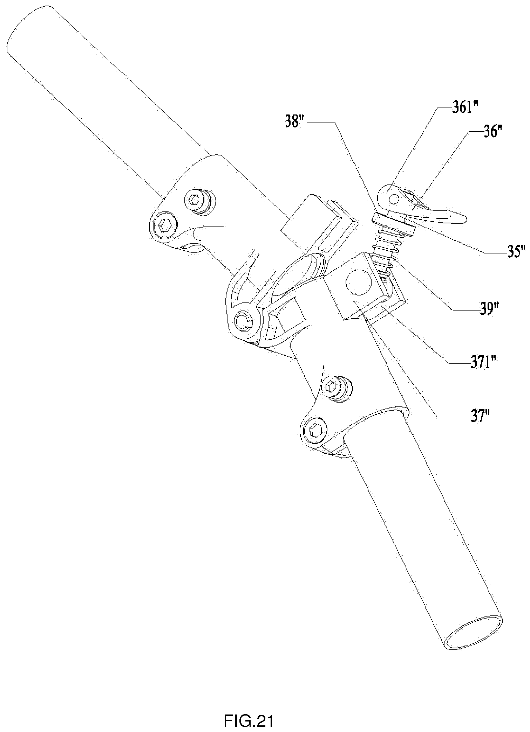

Referring to FIGs. 21-23, a further connecting assembly is shown. In this example, the grass trimmer differs from that according to the first embodiment in a connecting assembly. Only different parts of the fourth embodiment compared with the first embodiment will be described.

In this example, the connecting assembly includes a first connecting unit 31"', a second connecting unit 32'" and a hinge member 33'" and a locking member 34"'. The first connecting unit 31'" includes a fist connecting tube 311"'. The second connecting unit 32'" includes a second connecting tube 321'". The hinge member 33'" provides a hinge joint between the first connecting unit 31'" and the second connecting unit 32'". The locking member 34'" locks the first connecting tube 311'" and the second connecting tube 321'" so that they are aligned in a line. The rotating axis is in a direction of the first line L. In this example, the hinge member 33'" is a pivot which rotates in a direction perpendicular to the first line L. In a case that the first connecting tube 311'" and the second connecting tube 321'" are locked in a line, the hinge member 33'" is located inside an integral member consisting of the first connecting unit 31'" and the second connecting unit 32"'.

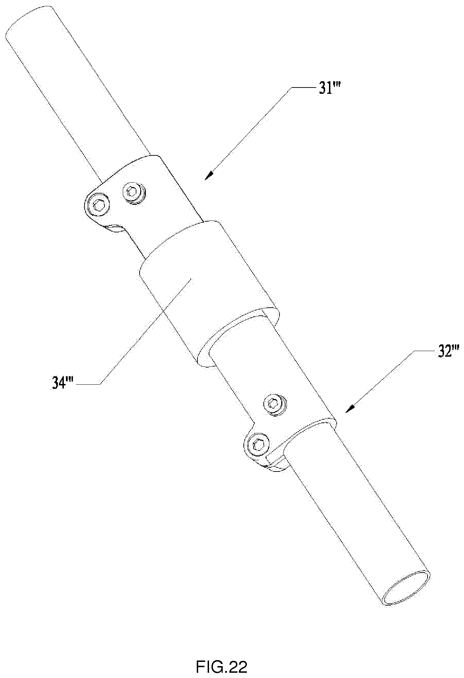

Specifically, the first connecting unit 31'" further includes a first end member 312'" which is connected to the first connecting tube 311"', and the second connecting unit 32'" further includes a second end member 322'" which is connected to the second connecting tube 321'". The hinge member 33'" is connected to both the first end member 312'" and the second end member 322"'. Moreover, the hinge member 33'" is provided in a range of the first end member 312'" in a plane perpendicular to the first connecting tube 311'". A threaded member 35'" having an external thread is fixedly connected to the end member 312'". The locking member 34'" is a rotating member with one end secured on the second end member 322'" and the other end having an internal thread for the threaded member 35"'to be screwed into . As shown in FIG. 22, in a case that the threaded member 35'" is screwed into the rotating member, the second end member 322'" is locked , so that the first connecting tube 311'" and the second connecting tube 321'" are locked in a line. In a case that the threaded member 35'" is screwed out the rotating member, the second end member 322'" is released, so that the second connecting rod rotates pair respect to the first connecting rod. It should be understood that the first connecting unit 31'" may have or not have the firs end member 312"', and the second connecting unit 32'" may have or not have the second end member 322"'. In the latter case, the first connecting tube 311'" and the second connecting tube 321'" may be formed with external threads. The locking member 34'" is a locking tube having two ends which rotate in the first connecting tube 311"'and the second connecting tube 321'" respectively. The hinge member 33'" is connected directly to the first connecting tube 311"'and the second connecting tube 321'".

The above illustrates and describes basic principles, main features and advantages of the present disclosure.

## Claims

1. A grass trimmer (100) comprising a main body (1) and a trimming device (2), wherein the main body comprises an operating device (10) and a power source; wherein the trimming device comprises:
a grass cutting assembly having a cutting member; and
a power head for driving the cutting member to rotate; the power head comprising a housing (21) and a motor (22) having a rotor assembly and a stator assembly; wherein the rotor assembly further comprises two or more magnetic pieces (222), and wherein the stator assembly comprises a stator support (224) and a coil assembly (225); wherein the stator support comprises a mounting portion (224a) being secured on the housing and a supporting portion (224b) for supporting the coil assembly; wherein the housing includes an accommodation portion (211) and a connection portion (212) which are formed integrally, the accommodation chamber defined for receiving the motor; the rotor assembly being accommodated in the accommodation chamber and comprising a rotor sleeve (221) which is a hollow cylinder rotatable around a pivotal axis, wherein the two or more magnetic pieces (222) are arranged at an inner wall of the rotor sleeve; the stator assembly being received in the rotor sleeve; and the coil assembly is disposed in the rotor sleeve by the supporting portion.

2. The grass trimmer according to claim 1, wherein the mounting portion is disposed at one end of the supporting portion; the accommodation chamber in the housing has an open end and a closed end; the mounting portion is disposed at the open end of the accommodation chamber; the housing has a logo region (211a) which is recessed at an outer surface (213) of the closed end, and a logo bump (211b) which is embossed in the logo region and has a maximum thickness less than a vertical distance between the outer surface of the closed end of the housing and the logo region.

3. The grass trimmer according to claim 1, wherein the housing further comprises a mounting portion on the housing for securing the stator support, wherein the mounting portion extends outwards from the housing in a radial direction perpendicular to an axial direction of the pivotal axis, and has a mounting hole (211d) which extends in the axial direction of the pivotal axis.

4. The grass trimmer according to claim 1, wherein the stator support has a shaft hole (224c) penetrating the mounting portion and the supporting portion; and the power head further comprises an output shaft (226) which is rotary in the shaft hole and is driven by the rotor sleeve.

5. The grass trimmer according to claim 1, wherein an inner wall of the housing is adjacent to an outer wall of the rotor sleeve, with a distance greater than 0.5 mm and less than 5 mm.

6. The grass trimmer according to claim 1, wherein a ratio of outputting power of the power head with respect to the weight of the grass trimmer is greater than 500 W/kg.

7. The grass trimmer according to claim 1, wherein the housing is made of an alloy having aluminum element.

8. The grass trimmer according to claim 1, further comprising a connecting assembly for connecting the operating device and the power head, and
the housing comprises:
an accommodation portion for providing the accommodation chamber; and
a connection portion (413) for being connected to the connecting assembly.

9. The grass trimmer according to any of claim 1 to 8, wherein the grass cutting assembly further comprises:
a grass cutting head which is driven by the power head to rotate; and
a tangle-free cover (25) between the power head and the grass cutting head,
wherein the cutting member is a grass cutting string which is wounded on the grass cutting head, and the tangle-free cover provides a protection wall which extends towards the grass cutting head, and a protection rib (252) which extends in a direction perpendicular to the axial direction of the pivotal axis.

10. The grass trimmer (100) according to any of claims 1 to 9,
wherein the motor is a brushless motor (22); and
wherein the housing is adjacent to the rotor assembly.

11. The grass trimmer (100) according to any of claims 1 to 10,
wherein the trimming device comprises a grass cutting head for mounting the cutting member; wherein the power head is prepared for driving the grass cutting head to rotate;
wherein the motor comprises an output shaft (226) which is connected to the grass cutting head.

12. The grass trimmer according to claim 11, wherein the accommodation chamber is a cylindrical chamber, with an axis of the output shaft as a central axis.

13. The grass trimmer according to claim 12, wherein the accommodation portion has at least an outer surface of a revolution body.

14. The grass trimmer according to claim 11, wherein the housing further comprises:
a mounting portion (211c) which extends outwards from the accommodation portion and has a mounting hole (211d) extending in a direction parallel to the output shaft;
wherein the mounting portion is formed integrally in one piece with the accommodation portion.

15. The grass trimmer according to claim 14, wherein the housing further comprises:
a connection portion (413) which extends from the accommodation portion in a direction inclined to the output shaft, and
wherein the mounting portion is formed integrally in one piece with the accommodation portion.

16. The grass trimmer according to claim 11, wherein the accommodation chamber has an open end in an axial direction of the output shaft, through which the output shaft extends outwards from the accommodation chamber, and the accommodation chamber has a continuous and dense inner wall.

17. The grass trimmer according to claim 11, wherein the motor is a brushless motor.

18. The grass trimmer according to claim 11, wherein the accommodation portion has a logo pattern at one end of the accommodation portion that is opposite to the grass cutting head.

19. The grass trimmer according to claim 11, wherein the accommodation portion has a maximum size in a radial direction of the output shaft which is less than a maximum size of the grass cutting head in the radial direction of the output shaft.

## Patentansprüche

1. Ein Grasschneider (100) umfassend einen Hauptkörper (1) und eine Schneideinrichtung (2),
worin der Hauptkörper eine Betreibeeinrichtung (10) und eine Leistungsquelle umfasst; worin die Schneideinrichtung umfasst:
eine Grasschneideeinrichtung, die ein Schneideteil hat; und
einen Leistungskopf, um den Schneideteil in Rotation zu versetzen; der Leistungskopf umfassend ein Gehäuse (21) und einen Motor (22), welcher eine Rotoreinrichtung und eine Statoreinrichtung hat; worin die Rotoreinrichtung weiter zwei oder mehr Magnetstücke (222) umfasst, und worin die Statoreinrichtung einen Statorträger (224) und eine Spuleneinrichtung (225) umfasst; worin der Statorträger einen an dem Gehäuse fixierten Montierabschnitt (224a) und einen Trägerabschnitt (224b) zum Tragen der Spuleneinrichtung umfasst; worin
das Gehäuse einen Aufnahmeabschnitt (211) und einen Verbindungsabschnitt (212) einschließt, die integral geformt sind, die Aufnahmekammer bestimmt ist, um den Motor aufzunehmen; die Rotoreinrichtung in der Aufnahmekammer aufgenommen ist und eine Rotorhülse (221) umfasst, die ein Hohlzylinder drehbar um eine zentrale Achse ist, worin die zwei oder mehr Magnetstücke (222) an einer inneren Wand der Rotorhülse angeordnet sind; die Statoreinrichtung in der Rotorhülse aufgenommen ist; und die Spuleneinrichtung innerhalb der Rotorhülse von dem Trägerabschnitt aufgenommen ist.

2. Der Grasschneider nach Anspruch 1, worin der Montierabschnitt sich an einem Ende des Trägerabschnitts befindet; die Aufnahmekammer in dem Gehäuse ein offenes Ende und ein geschlossenes Ende hat; der Montierabschnitt sich am offenen Ende der Aufnahmekammer befindet; das Gehäuse einen Logobereich (211a), welcher an einer äußeren Oberfläche (213) des geschlossenen Endes eingesenkt ist, und eine Logoerhöhung (211b), die in den Logobereich geprägt ist und eine Maximaldicke kleiner als ein Vertikalabstand zwischen der äußeren Oberfläche des geschlossenen Endes des Gehäuses und dem Logobereich hat, aufweist.

3. Der Grasschneider nach Anspruch 1, worin das Gehäuse weiter einen Montierabschnitt an dem Gehäuse umfasst, um den Statorträger zu befestigen, worin der Montierabschnitt sich auswärts aus dem Gehäuse in einer radialen Richtung senkrecht zu einer axialen Richtung der zentralen Achse erstreckt, und ein Montierloch (211d) hat, welches sich in der axialen Richtung der zentralen Achse erstreckt.

4. Der Grasschneider nach Anspruch 1, worin der Statorträger ein Wellenloch (224c) durchsetzend den Montierabschnitt und den Trägerabschnitt hat; und der Leistungskopf weiter eine Ausgangswelle (226) umfasst, welche sich drehbar in dem Wellenloch befindet und von der Rotorhülse angetrieben ist.

5. Der Grasschneider nach Anspruch 1, worin eine innere Wand des Gehäuses benachbart zu einer äußeren Wand der Rotorhülse ist, mit einem Abstand größer als 0,5 mm und kleiner als 5 mm.

6. Der Grasschneider nach Anspruch 1, worin ein Verhältnis der Ausgangsleistung des Leistungskopfes zu dem Gewicht des Grasschneiders größer als 500 W/kg ist.

7. Der Grasschneider nach Anspruch 1, worin das Gehäuse aus einer Legierung mit dem Element Aluminium gefertigt ist.

8. Der Grasschneider nach Anspruch 1, weiter umfassend eine Verbindungseinrichtung zum Verbinden der Betreibeeinrichtung und des Leistungskopfes, und bei dem das Gehäuse umfasst:
einen Aufnahmeabschnitt zum Bilden der Aufnahmekammer; und
einen Verbindungsabschnitt (413), welcher mit der Verbindungseinrichtung zu verbinden ist.

9. Der Grasschneider nach einem der Ansprüche 1 bis 8, worin die Grasschneideeinrichtung weiter umfasst:
einen Grasschneidekopf, welcher von dem Leistungskopf in Rotation versetzt wird; und
eine Verhedderfreiheitsabdeckung (25) zwischen dem Leistungskopf und dem Grasschneidekopf,
worin das Schneideteil ein Grasschneidefaden ist, welcher auf den Grasschneidekopf aufgewickelt ist, und die Verhedderfreiheitsabdeckung eine Schutzwand, welche sich zu dem Grasschneidekopf erstreckt, und eine Schutzrippe (252), welche sich in einer Richtung senkrecht zu der axialen Richtung der zentralen Achse erstreckt, bildet.

10. Der Grasschneider (100) nach einem der Ansprüche 1 bis 9,
worin der Motor ein bürstenloser Motor (22) ist; und
worin das Gehäuse benachbart zu der Rotoreinrichtung ist.

11. Der Grasschneider (100) nach einem der Ansprüche 1 bis 10,
worin die Schneideinrichtung einen Grasschneidekopf zum Montieren des Schneideteils umfasst; worin der Leistungskopf eingerichtet ist, um den Grasschneidekopf in Rotation zu versetzen;
worin der Motor eine Ausgangswelle (226), welche mit dem Grasschneidekopf verbunden ist, umfasst.

12. Der Grasschneider nach Anspruch 11, worin die Aufnahmekammer eine zylindrische Kammer mit einer Achse der Ausgangswelle als zentrale Achse ist.

13. Der Grasschneider nach Anspruch 12, worin der Aufnahmeabschnitt zumindest eine äußere Oberfläche eines Rotationskörpers hat.

14. Der Grasschneider nach Anspruch 11, worin das Gehäuse weiter umfasst:
einen Montierabschnitt (211c), welcher sich auswärts von dem Aufnahmeabschnitt erstreckt und ein Montierloch (211d) hat, welches sich in einer Richtung parallel zu der Ausgangswelle erstreckt;
worin der Montierabschnitt integral in einem Stück mit dem Aufnahmeabschnitt geformt ist.

15. Der Grasschneider nach Anspruch 14, worin das Gehäuse weiter umfasst:
einen Montierabschnitt (413), welcher sich von dem Aufnahmeabschnitt in einer Richtung geneigt gegen die Ausgangswelle erstreckt, und
worin der Montierabschnitt integral in einem Stück mit dem Aufnahmeabschnitt geformt ist.

16. Der Grasschneider nach Anspruch 11, worin die Aufnahmekammer ein offenes Ende in einer axialen Richtung der Ausgangswelle hat, durch welches die Ausgangswelle sich auswärts von der Aufnahmekammer erstreckt, und die Aufnahmekammer eine durchgehende und dichte innere Wand hat.

17. Der Grasschneider nach Anspruch 11, worin der Motor ein bürstenloser Motor ist.

18. Der Grasschneider nach Anspruch 11, worin der Aufnahmeabschnitt ein Logomuster an einem Ende des Aufnahmeabschnitts, welches dem Grasschneidekopf gegenüberliegt, hat.

19. Der Grasschneider nach Anspruch 11, worin der Aufnahmeabschnitt eine Maximalgröße in einer radialen Richtung der Ausgangswelle hat, welche kleiner als eine Maximalgröße des Grasschneidekopfes in einer radialen Richtung der Ausgangswelle ist.

## Revendications

1. Tondeuse à gazon (100) comprenant un corps principal (1) et un dispositif de tonte (2), dans laquelle le corps principal comprend un dispositif de commande (10) et une source de puissance ;
dans laquelle le dispositif de tonte comprend :
un ensemble de coupe d'herbe comportant un élément coupant ; et
une tête d'alimentation destinée à entraîner l'élément coupant en rotation ; la tête d'alimentation comprenant un boîtier (21) et un moteur (22) comportant un ensemble de rotor et un ensemble de stator ; l'ensemble de rotor comprenant en outre deux ou plusieurs pièces magnétiques (222), et l'ensemble de stator comprenant un support de stator (224) et un ensemble de bobine (225) ; le support de stator comprenant une partie de montage (224a) fixée sur le boîtier et une partie de support (224b) destinée à supporter l'ensemble de bobine ;
dans laquelle le boîtier comprend une partie de réception (211) et une partie de connexion (212), lesquelles sont formées intégralement, la chambre de réception étant définie pour recevoir le moteur ; l'ensemble de rotor étant reçu dans la chambre de réception et comprenant un manchon de rotor (221) consistant en un cylindre creux rotatif autour d'un axe de pivotement, les deux ou plusieurs pièces magnétiques (222) étant disposées sur une paroi intérieure du manchon de rotor ; l'ensemble de stator étant reçu dans le manchon de rotor ; et l'ensemble de bobine étant disposé dans le manchon de rotor par la partie de support.

2. Tondeuse à gazon selon la revendication 1, dans laquelle la partie de montage est disposée à une extrémité de la partie de support ; la chambre de réception dans le boîtier présente une extrémité ouverte et une extrémité fermée ; la partie de montage est disposée à l'extrémité ouverte de la chambre de réception ; le boîtier comporte une région de logo (211a) renfoncée dans une surface extérieure (213) de l'extrémité fermée, et une bosse de logo (211b) en relief dans la région de logo et présentant une épaisseur maximale inférieure à une distance verticale entre la surface extérieure de l'extrémité fermée du boîtier et la région de logo.

3. Tondeuse à gazon selon la revendication 1, dans laquelle le boîtier comprend en outre une partie de montage sur le boîtier pour la fixation du support de stator, la partie de montage s'étendant vers l'extérieur à partir du boîtier dans une direction radiale perpendiculaire à une direction axiale de l'axe de pivotement, et comportant un trou de montage (211d) s'étendant dans la direction axiale de l'axe de pivotement.

4. Tondeuse à gazon selon la revendication 1, dans laquelle le support de stator comporte un trou d'arbre (224c) pénétrant dans la partie de montage et la partie de support ; et la tête d'alimentation comprend en outre un arbre de sortie (226) rotatif dans le trou d'arbre et entraîné par le manchon de rotor.

5. Tondeuse à gazon selon la revendication 1, dans laquelle une paroi intérieure du boîtier est adjacente à une paroi extérieure du manchon de rotor, avec une distance supérieure à 0,5 mm et inférieure à 5 mm.

6. Tondeuse à gazon selon la revendication 1, dans laquelle un rapport de la puissance de sortie du la tête d'alimentation au poids de la tondeuse à gazon est supérieur à 500 W/kg.

7. Tondeuse à gazon selon la revendication 1, dans laquelle le boîtier est constitué d'un alliage comportant un composant d'aluminium.

8. Tondeuse à gazon selon la revendication 1, comprenant en outre un ensemble pour la connexion du dispositif de commande et de la tête d'alimentation, et le boîtier comprend :
une partie de réception destinée à fournir la chambre de réception ; et
une partie de connexion (413) destinée à être reliée à l'ensemble de connexion.

9. Tondeuse à gazon selon l'une quelconque des revendications 1 à 8, dans laquelle l'ensemble de coupe d'herbe comprend en outre :
une tête de coupe d'herbe entraînée en rotation par la tête d'alimentation ; et
un couvercle anti-enchevêtrement (25) entre la tête d'alimentation et la tête de coupe d'herbe,
dans laquelle l'élément coupant est un fil de coupe d'herbe enroulé sur la tête de coupe d'herbe, et le couvercle anti-enchevêtrement (25) fournit une paroi de protection s'étendant vers la tête de coupe d'herbe, et une nervure de protection (252) s'étendant dans une direction perpendiculaire à la direction axiale de l'axe de pivotement.

10. Tondeuse à gazon (100) selon l'une quelconque des revendications 1 à 9,
dans laquelle le moteur est un moteur sans balai (22) ; et
dans laquelle le boîtier est adjacent à l'ensemble de rotor.

11. Tondeuse à gazon (100) selon l'une quelconque des revendications 1 à 10,
dans laquelle le dispositif de tonte comprend une tête de coupe d'herbe pour le montage de l'élément coupant ; la tête d'alimentation étant préparée pour entraîner la tête de coupe d'herbe en rotation ;
dans laquelle le moteur comprend un arbre de sortie (226) relié à la tête de coupe d'herbe.

12. Tondeuse à gazon selon la revendication 11, dans laquelle la chambre de réception est une chambre cylindrique, avec un axe de l'arbre de sortie comme axe central.

13. Tondeuse à gazon selon la revendication 12, dans laquelle la partie de réception présente au moins une surface extérieure d'un corps de révolution.

14. Tondeuse à gazon selon la revendication 11, dans laquelle le boîtier comprend en outre :
une partie de montage (211c) s'étendant vers l'extérieur à partir de la partie de réception et présentant un trou de montage (211d) s'étendant dans une direction parallèle à l'arbre de sortie ;
dans laquelle la partie de montage est formée intégralement d'un seul tenant avec la partie de réception.

15. Tondeuse à gazon selon la revendication 14, dans laquelle le boîtier comprend en outre :
une partie de connexion (413) s'étendant à partir de la partie de réception dans une direction inclinée par rapport à l'arbre de sortie, et
dans laquelle la partie de montage est formée intégralement d'un seul tenant avec la partie de réception.

16. Tondeuse à gazon selon la revendication 11, dans laquelle la chambre de réception présente une extrémité ouverte dans une direction axiale de l'arbre de sortie, à travers laquelle l'arbre de sortie s'étend vers l'extérieur à partir de la chambre de réception, et la chambre de réception comporte une paroi intérieure continue et dense.

17. Tondeuse à gazon selon la revendication 11, dans laquelle le moteur est un moteur sans balai.

18. Tondeuse à gazon selon la revendication 11, dans laquelle la partie de réception comporte un motif de logo à une extrémité de la partie de réception opposée à la tête de coupe d'herbe.

19. Tondeuse à gazon selon la revendication 11, dans laquelle la partie de réception présente une taille maximale dans une direction radiale de l'arbre de sortie, laquelle est inférieure à une taille maximale de la tête de coupe d'herbe dans la direction radiale de l'arbre de sortie.
